(19) **Europäisches Patentamt / European Patent Office / Office européen des brevets**

(11) **EP 2 642 692 B1**

(12) **EUROPEAN PATENT SPECIFICATION**

(45) Date of publication and mention
of the grant of the patent:
**16.03.2016  Bulletin 2016/11**

(51) Int Cl.:
***H04L 12/24*** *(2006.01)*

(21) Application number: **12160397.1**

(22) Date of filing: **20.03.2012**

(54) **Monitoring of a communication device over time**

Überwachung einer Kommunikationsvorrichtung über Zeitablauf

Surveillance d'un dispositif de communication au fil du temps

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.09.2013  Bulletin 2013/39**

(73) Proprietors:
• **ALCATEL LUCENT
92100 Boulogne-Billancourt (FR)**
• **INRIA - Institut National de Recherche en
Informatique et en Automatique
78153 Le Chesnay Cedex (FR)**

(72) Inventors:
• **Junier, Aurore
35000 RENNES (FR)**
• **Ronot, Benoît
91620 NOZAY (FR)**
• **Bouillard, Anne
75013 PARIS (FR)**

(74) Representative: **Loyer & Abello
9, rue Anatole de la Forge
75017 Paris (FR)**

(56) References cited:
**EP-A1- 1 244 248     US-A1- 2011 078 302**

• **DESHPANDE S ET AL: "A Statistical Approach to
Anomaly Detection in Interdomain Routing",
BROADBAND COMMUNICATIONS, NETWORKS
AND SYSTEMS, 2006. BROADNETS 2006. 3RD
INTERNATIONAL CONFERENCE ON, IEEE,
PISCATAWAY, NJ, USA, 1 October 2006
(2006-10-01), pages 1-10, XP031155948, ISBN:
978-1-4244-0424-7**
• **THOTTAN M ET AL: "Anomaly detection in IP
networks", IEEE TRANSACTIONS ON SIGNAL
PROCESSING IEEE USA, vol. 51, no. 8, August
2003 (2003-08), pages 2191-2204, XP002681630,
ISSN: 1053-587X**

**EP 2 642 692 B1**

**Description**

**Field of the invention**

The invention relates to the technical field of monitoring of communication devices, in particular communications networks and network elements thereof.

**Background**

Communications networks have grown more and more complex in terms of architecture and also in terms of implemented processes, protocols and services. The increasing complexity poses a challenge to network operators in charge of ensuring faultless operations.
Some studies about detection of anomalies in communications systems focus on failures, interruption of service or bad configuration that crash the network. However, reactive management methods aiming at resolving operating problems once they arise are less and less adapted to large interconnected systems where recovery from a crash would involve huge amounts of time and resources.
Patent Applications US20110078302 and EP1244248 disclose methods which focus on event trending and reactive monitoring.

**Summary**

In an embodiment, the invention provides a method for monitoring a communication device, comprising: detecting a flow of messages at an interface of the communication device,recording a sequence of message events over time, wherein a message event record comprises a date of a detected message of the flow,computing a modelized rate (p) of the messages over time as a function of the sequence of message events,characterized in that the modelized rate (p) represents a rate at which the messages of the flow are expected to be sent or received,detecting a sequence of rate change events over time, and generating a corresponding sequence of rate change event records, wherein a rate change event record comprises an updated value of the modelized rate of the messages,wherein said steps of computing a modelized rate of the messages over time and detecting a sequence of rate change events over time comprises repeatedly performing the steps of:predicting a time-window (U, L) for the date of a subsequent message event (P) of the sequence of message events as a function of past message events of the sequence of message events and a current modelized rate (p) of the messages,if the date of the subsequent message event of the sequence of message events is out of the predicted time-window, detecting a rate change event and updating the modelized rate as a function of the date of the subsequent message event,wherein the updating of the modelized rate comprises:computing an actual rate of the messages as a function of the date of the subsequent message event and the date of an earlier message event of the sequence of message events, and taking the actual rate as the new current modelized rate.
The method can be implemented with a flow of incoming messages received by the communication device from its environment. The method can also be implemented with a flow of messages transmitted by the communication device to its environment.
According to embodiments, such a method can comprise one or more of the features below.
In embodiments the method further comprises detecting an abnormal state of the communication device as a function of the sequence of rate change events.
In embodiments the abnormal state is detected in response to a monotonous evolution of the modelized rate over a long period of time, which hints at a diverging behavior of the device. In embodiments the abnormal state is detected as a function of a number of different modelized rates that have been obtained over time, e.g. when that number becomes higher than a given threshold, thus hinting at a long-term instability of the communications device.
The computation of the modelized rate of the messages and subsequent detection of rate change events over time can be done with a number of mathematical models, e.g. by calculating a linear regression function of the message events over a sliding time window. More refined statistical correlations could be computed as well, although computational cost should generally be kept sufficiently low for a real time implementation of the method to be possible.
In embodiments, the repeated steps further comprise:

   if the detected date of the subsequent message event is within the predicted time-window, updating the time-window as a function of detected date of the subsequent message event so as to narrow down the time-window.

In embodiments, the updating of the time-window comprises:

   computing an actual rate of the messages as a function of the detected date of the subsequent message event of the sequence, and

advancing a latest boundary of the time-window if the actual rate is above the current modelized rate and delaying an earliest boundary of the time window if the actual rate is below the current modelized rate.

In embodiments, at least one of an earliest boundary and a latest boundary of the time-window is computed as a function of the rank of the subsequent message event in the sequence of message events divided by the current modelized rate.

In embodiments, an earliest boundary of the time-window is computed as a function of a positive parameter representing a maximum number of messages of the flow that may arrive simultaneously at the communication device in a normal state of the communication device.

In embodiments, a latest boundary of the time-window is computed as a function of a positive parameter representing a maximum period of time during which no message of the flow may be detected at the communication device in a normal state of the communication device.

Such monitoring operations can be implemented over different time scales, depending on underlying parameters that influence operations the communication device, e.g. timers, refresh parameters, time out parameters of protocol engines and the like. The method can be implemented a multiple consecutive levels to provide a respective monitoring over increasingly long time scales.

In corresponding embodiments, the steps of computing a modelized rate of the messages over time and detecting a sequence of rate change events over time constitute a monitoring operation at a first level, and the method further comprises:

filtering the sequence of message events as a function of the rate change events detected during the first-level monitoring operation, and

performing again said steps of computing a current modelized rate of the messages over time and detecting a sequence of rate change events over time by taking the filtered sequence of message events as an input instead of the sequence of message events.

In embodiments, the step of filtering the sequence of message events retains only message events that caused detection of a rate change event.

In embodiments, the method further comprises one or more further monitoring operations at consecutive levels, each further monitoring operation comprising: filtering the sequence of message events taken as an input for the monitoring operation at the previous level so as to retain only message events that caused a rate change event to be detected during the monitoring operation at the previous level, performing again the steps of computing a current modelized rate of the messages over time and detecting a sequence of rate change events over time by taking the filtered sequence of message events as an input.

Any number of monitoring levels can be provided in this manner, e.g. up to five consecutive levels. In embodiments, the detecting of an abnormal evolution of the communication device is performed as a function of the sequence of the modelized rates over time computed during the monitoring operation at one or more levels. In embodiments, the monitoring operation at a highest level provides the main input for detecting the abnormal behavior, e.g. as a long-term divergence of a process occurring within the communications system.

The flow of messages that serves to implement the monitoring method can be defined in several ways, e.g. as a function of one or more parameters selected among protocol, message type, IANA number, source address, destination address. In embodiments, the flow of messages is made up of messages generated in accordance with a predefined protocol, e.g. a routing protocol or a network management protocol.

Messages exchanged by routing engines are of peculiar relevance for the monitoring of in IP networks since they are responsible for maintaining a consistent picture of the network topology among distant network elements. Especially link-state routing protocols such as Open Shortest Path First (OSPF) and its derivatives involve recurrent flows of messages between routers that are supposed to follow an overall steady rate.

In an embodiment, the invention provides a computer program comprising executable code that causes a computer to perform all the steps of the above- described monitoring methods when executed.

Aspects of the invention are based on the idea of monitoring and detecting malicious or hidden anomalies that may only become apparent over a long period of time by exploiting a memory of the past evolution of a flow of messages.

Aspects of the invention are based on the idea of proactively detecting hidden and malicious issues that may or will become a threat for the communications system.

Aspects of the invention are based on the idea of providing monitoring methods having very light computational requirements and suitable for real-time monitoring of communication devices and networks.

**Brief description of the drawings**

These and other aspects of the invention will be apparent from and elucidated with reference to the embodiments described hereinafter, by way of example, with reference to the drawings.

Figure 1 is a functional representation of a communications network in which monitoring methods can be used to detect anomalies over time.
Figure 2 is a functional representation of a network element comprising a monitoring module.
Figures 3 to 5 are graphics showing the arrival of consecutive messages of a flow over time and calculation steps for determining corresponding modelized rates.
Figure 6 is a graphic showing a sequence of modelized rates over time that may be obtained in an embodiment.
Figure 7 is a functional representation of a multi-level monitoring device.
Figures 8 to 11 illustrate an example of a flow of messages having a monotonously decreasing rate over a large period time and the modelized rates computed at several consecutive levels.

**Detailed description of the embodiments**

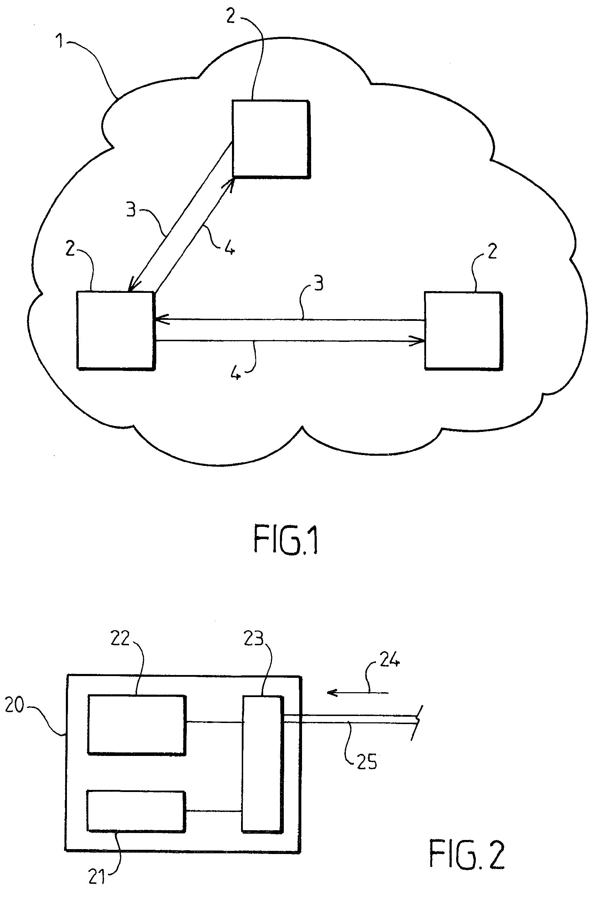

Figure 1 shows very schematically a communications network 1 that comprises a plurality of network elements 2 interconnected by links not shown. The topology, number of network elements and physical layer technology employed for the interconnection may be of any type. The term 'network element' encompasses a variety of communicating devices, e.g. terminals, switches, routers, work stations, network management consoles and the like. Various automated processes executed by the network elements 2 cause flows of messages 3, 4 to be recurrently exchanged between the interconnected network elements 2. Such processes are typically controlled by operating systems or protocol engines of various types.

For example, recurrent flows of messages may be generated in accordance with:

- routing protocols, e.g. link-state routing protocols like OSPF, to refresh adjacencies between nodes or update network topology,
- signaling protocols, e.g. RSVP and the like, to refresh or update MPLS tunnels,
- network management protocols, e.g. SNMP, to collect reports from management agents,
- alarms generated by the network.

A monitoring process that may be implemented in the network of Fig. 1 is based on the monitoring of at least one flow of messages that arrives at a network element 2 over time and/or that is transmitted by the network element 2 over time. The monitoring process operates as follows:

- The monitoring is initialized with initial parameters defining an initial modelized rate, e.g. rate of arrival or rate of transmission, and a time window prediction model. For example, the modelized rate can be initialized at a preset value or at a measured value, i.e. an actual rate of messages measured before the monitoring process actually begins, e.g. measured over two or more messages already arrived or transmitted.
- The time window prediction model is employed to compute a time window for each subsequent message of the flow, representing a period of time in which reception or transmission of the subsequent message is expected to occur. The modelized rate represents an average rate at which the messages of the flow are currently expected to be sent or received.
- As long as subsequent messages occur within the predicted time windows, operations in the network element are deemed normal. The time windows represent acceptable ranges of fluctuation of the messages in time with respect to the modelized rate.
- When a subsequent message occurs out of the corresponding time window, the actual date of the message serves to update the modelized rate. Preferably, the message is also recorded and marked as a special event for the purpose of further monitoring steps.
- The process continues with the updated value of the modelized rate, i.e. a rate estimated in accordance with a given computation model.
- The values of the modelized rate that are consecutively obtained over time are recorded and processed to detect an abnormal state of the network element or group of network elements involved in the monitored flow of messages.

The monitoring process is based on the assumption that flows of messages generated by protocol engines are expected to occur at an approximately constant rate or at a rather small number of different rates. This assumption stems from the observation that protocol engines are typically implemented with preset protocol parameters such as timeouts, refresh periods and the like, which cause the protocol processes to execute on a steady time basis.

The monitoring process is also based on the assumption that small fluctuations in the time of arrival or time of transmission of messages are acceptable and indeed expected due to transient phenomena in individual network elements, such as traffic load variations, CPU load variations, buffer occupation variations and the like. Therefore such small fluctuations are not to be construed as abnormal states of network elements. By contrast, the process aims at detecting phenomena that occur over a long period of time compared to the inter-arrival times of the messages, e.g. long-term monotonous evolution or divergence of the message rate, long-term wandering evolution of the message rate and other similar phenomena likely to become a threat for the proper functioning of the communications network.

The time scales involved in the process may be vary to a large extent, depending on the specifics of the system to be monitored. Preferably, the monitoring process is implemented at several levels that operate on different time scales.

The monitoring process may be executed by a computer-implemented monitoring module disposed in a network element that receives or transmits the flow of messages or in a separate device, e.g. a network management system connected to the network elements.

Figure 2 is a functional representation of a network element 20 that includes a monitoring module 21 to execute such a monitoring process. Network element 20 includes a protocol engine 22, e.g. OSPF routing engine, which sends and receives protocol messages through a communication module 23. Communication module 23 is connected to further network elements by physical links 25 and employs a protocol stack for communicating the protocol messages, for example a TCP/IP stack or other. Monitoring module 21 cooperates with protocol engine 22 and/or communication module 23 to detect an incoming flow of messages 24 in accordance with predefined criteria and takes the detected time of arrival of the messages as an input for computing the modelized, i.e. estimated rates of the messages over time.

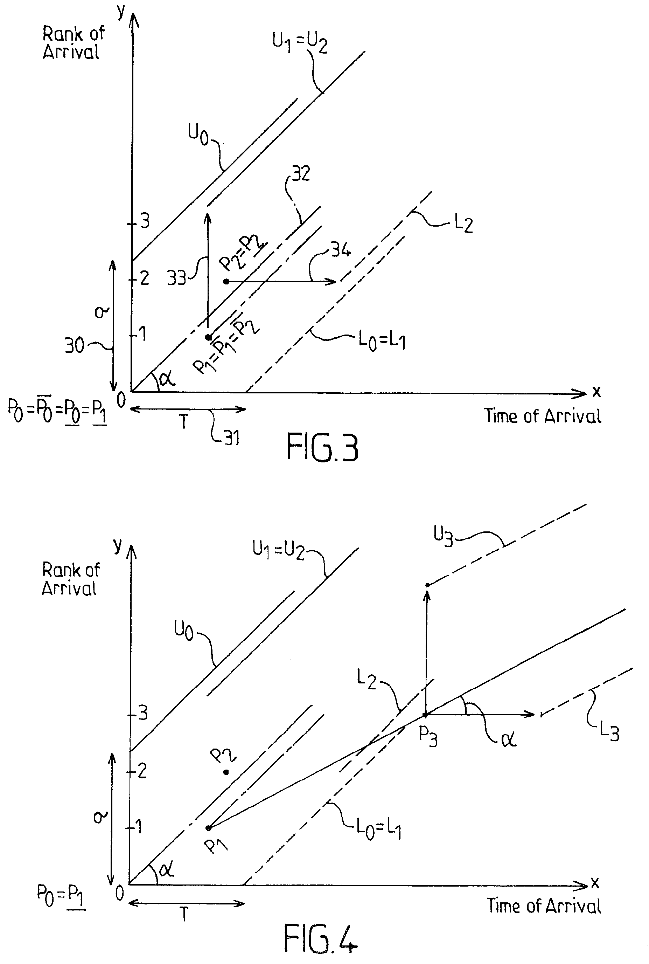

With reference to figures 3 to 5, an embodiment of the monitoring process executed by monitoring module 21 will now be described in further details. For the sake of illustration, the flow of messages consists of Link State Advertisements (LSA) addressed to the network element 20 in accordance with an OSPF routing protocol.

In figures 3 to 5, the consecutive messages of the flow that are detected at the network element 20 are represented by points $P_n$, where n is a positive integer that denotes the rank of the message in the flow (assuming FIFO), which is shown on the ordinate axis y. The abscissae x represent the time of arrival of the messages. With this representation, the flow is a non-decreasing sequence $(x_n)$, with $x_0 = 0$ by convention and where $x_n$ is the time of arrival of the n-th message of the flow. The n-th message of the flow is denoted:

$$P_n = (x_n, y=n).$$

For each subsequent message, a computational model is employed to predict a time window. The model in the example illustrated uses five parameters:

- p=tan(a) denotes the current arrival rate of the messages. This parameter is initialized at a positive value at the beginning of the algorithm and updated every time a subsequent message arrives out of the predicted time window.
- T is a positive parameter that serves to define a latest boundary of the time window, also referred to as Lower constraint $L_n$. The quantity p T schematically represents the number of messages that can be lost simultaneously.
- $\sigma$ is a positive parameter that serves to define an earliest boundary of the time window, also referred to as Upper constraint $U_n$. The quantity $\sigma$ schematically represents the number of messages that can arrive simultaneously at the network element.
- $\overline{P}$ represents the past message that arrived after the last update of p and that lies the closest to the latest boundary of the time window, i.e. the closest to the Lower constraint curve $L_n$. This point is referred to as upper critical message and serves to update the Upper constraint $U_n$ whenever it is updated.
- $\underline{P}$ represents the past message that arrived after the last update of $\rho$ and that lies the closest to the earliest boundary of the time window, i.e. the closest to the Upper constraint curve $U_n$. This point is referred to as lower critical message and serves to update the Lower constraint $L_n$ whenever it is updated.

Referring to Figure 3, $P_0$ and $\alpha$=Arctan($\rho$) show the initial state of the model. The critical points $\overline{P}_0$ and $\underline{P}_0$ are initially identical to $P_0$. The line $U_0$ denotes the early boundary computed as a function of critical point $\overline{P}_0$ and parameter $\sigma$, as shown by arrow 30. The line $L_0$ denotes the late boundary computed as a function of critical point $\underline{P}_0$ and parameter T, as shown by arrow 31. Boundaries $U_n$ and $L_n$ define the predicted time window for the n+1-th message to be received. At any step, the boundaries $U_n$ and $L_n$ are defined as linear functions of time with slope $\rho$=tan($\alpha$). As a consequence the time window can also be referred to as a 'tube' due to its representation in the graphics.

Figure 3 illustrates a message $P_1$ than arrived within the time window defined by $U_0$ and $L_0$. Message $P_1$ does

not cause the rate $\rho$ to be updated. Figure 3 illustrates a subsequent message $P_2$ than arrived within the time window defined by $U_1$ and $L_1$. Message $P_2$ does not cause the rate $\rho$ to be updated either. However each message arrived within the time window may cause an update of one of the critical points so as to narrow down the time window for subsequent messages.

More precisely, when the subsequent message arrives at a later time than the time predicted by tracing a line with slope p from the current upper critical point, the message becomes the new upper critical point. This illustrated by point $P_1$ and line 32 in Figure 3. Conversely, when the subsequent message arrives at an earlier time than the time predicted by tracing a line with slope p from the current lower critical point, the message becomes the new critical point. This illustrated by point $P_2$ and line 32 in Figure 3. At each message, the upper and lower boundaries are updated as a function of the updated critical points, as shown by arrows 33 and 34.

Turning now to figure 4, the case where a subsequent message arrives later than the predicted time window is illustrated by message P3, which is beyond line $L_2$, i.e. out of the 'tube'. In this case, the parameter p is updated to reflect a new rate of arrival of the messages, which is computed as a function of the actual time of arrival of message $P_3$. As shown, the new rate of arrival is the slope of the line joining the constraint-breaking message $P_3$ with the current upper critical point, here P1=$\overline{P}_1$. The initial rate and the new rate are stored to serve for detection of anomalies. The process then reinitializes from point P3.

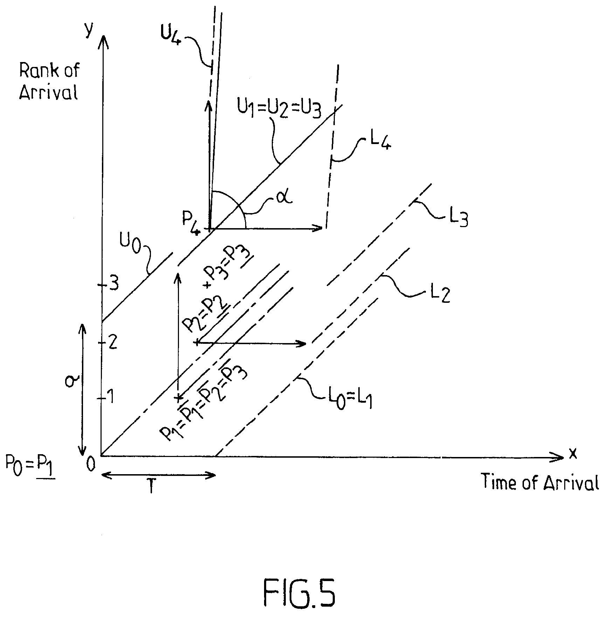

Turning now to figure 5, the case where a subsequent message arrives later than the predicted time window is illustrated by message P4, which is beyond line $U_3$, i.e. out of the 'tube'. In this case, the parameter p is updated to reflect a new rate of arrival of the messages, which is computed as a function of the actual time of arrival of message $P_4$. As shown, the new rate of arrival is the slope of the line joining the constraint-breaking message $P_4$ with the current lower critical point, here P3=$\overline{P}_3$. The initial rate and the new rate are stored to serve for detection of anomalies. The process then reinitializes from point $P_4$. It should be noted that figures 4 and 5 depict two different sequences of messages for the sake of illustration.

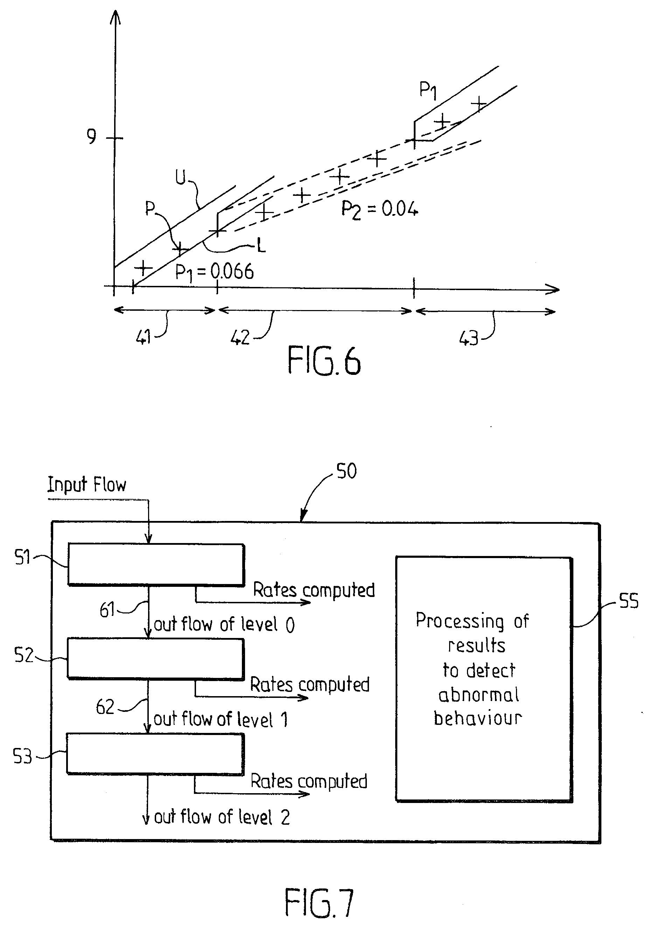

Figure 6 shows the outlook of the flow of messages and corresponding tube resulting from applying the above computational model over time. Namely, the flow of messages appears as a sequence of consecutive periods 41, 42, 43 each with a given constant rate of arrival. In the example shown, the third period corresponds to the same rate as the first period. This may represent a healthy system where two operations take place alternatively and involve a different rate of messages. By contrast, if the modeled rate follows a monotonous i.e. diverging evolution over a certain period of time, an alarm may be raised.

The above-described process makes it possible to monitor one or more flow of messages in real time to detect anomalies. Indeed the computational cost of the process is very limited. Pseudo-code for implementing the above-described process is appended in Table 1.

Turning to figure 7, there is shown a second embodiment of a monitoring module 50 that include several consecutive levels 51, 52, 53. The rate computation module of first level 51 operates exactly as described above in reference of figure 3 to 6. In addition, it produces a filtered flow of the messages that includes only detected messages of the input flow that cause the modeled rate to be updated, i.e. constraint-breaking messages. As a consequence the output filtered flow shown by arrow 61 comprises a smaller number of messages with a larger inter-arrival interval.

Filtered flow 61 serves as the input flow for the rate computation module of second level 52, which operates in the same manner. As a consequence, module of second level 52 makes it possible to observe the flow of messages over a larger time scale, still with very limited computational costs, to detect signs of unhealthy phenomena, e.g. divergence or wandering.

Any number of consecutive rate computation levels can be implemented in the same manner to provide monitoring over increasingly large time scales, e.g. minutes, hours, days, months or years.

The results produced by the first and final level are the most significant. The first level curve stability directly describes the stability of the system. The last level curve will show if the system is divergent compared to theoretical models, i.e. assumptions mentioned above. These results make it possible to observe in real-time the symptoms of hidden/malicious behavior of control flow by using these results as "health indicators".

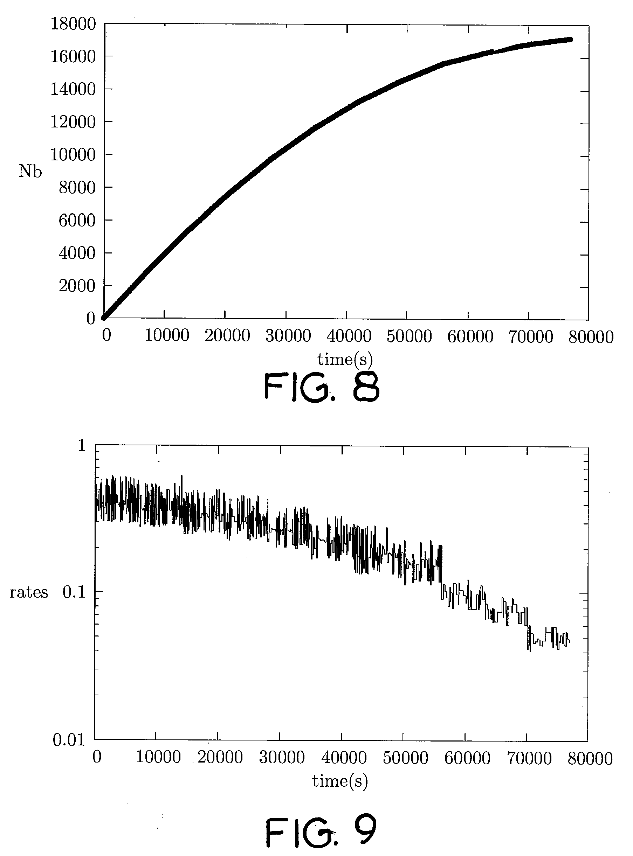

Figures 8 to 11 illustrate an example of a diverging system in which the rate of messages is monotonously decreasing over a large period time, i.e. about 80,000 seconds. Figure 8 shows the flow of messages, i.e. the cumulative number of messages received by the node being monitored from time = 0 to time = 80,000.

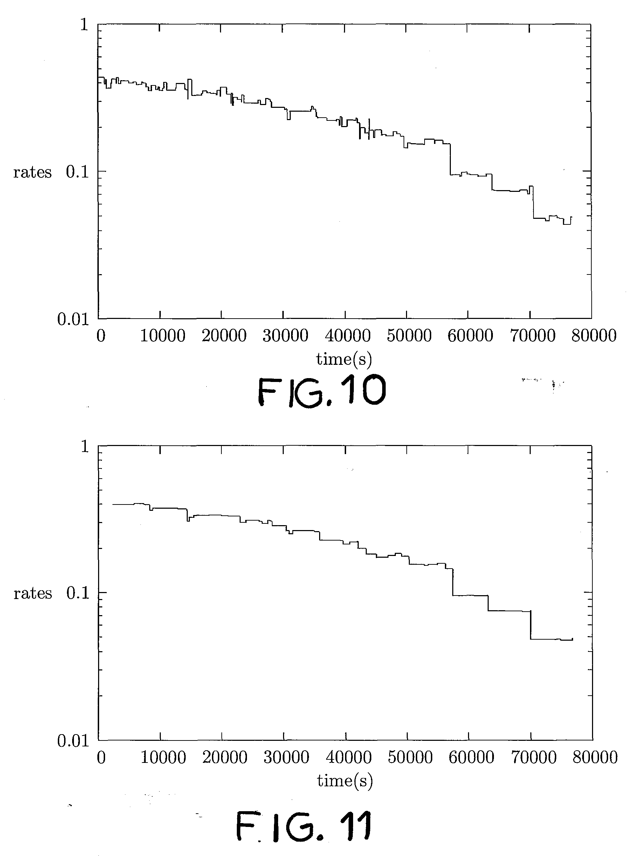

Figures 9, 10 and 11 show the corresponding evolution of the modelized rates as computed by the first level rate computation module 51, second level rate computation module 52 and third level rate computation module 53 over the same period of time. In the divergent situation depicted, all levels consistently show a reduction of the rate over time. However, it is readily seen that the higher the level of the rate computation module, the lower the number of changes experienced by the modelized rate of messages. In addition, the higher the level of the rate computation module is, the more monotonous the evolution of the rate. Namely in figure 11, almost all changes of the modelized rate consist of a decrease, whereas changes in both directions can be observed in almost equal numbers in figure 9. This decreasing trend would be even more monotonous in a fourth or fifth level rate computation module (not shown). As a consequence, in this example, the third level module makes it possible to detect a clear decreasing trend already at 30,000 s or before, whereas the output of the first level module can be interpreted as a noisy signal without any clear trend. In an embodiment, the decision module 55 triggers an alarm as soon as the output of the third or fourth level rate computation module shows 15 changes in the same direction out of the last 20 changes of the computed rate.

The above described processes make it possible to detect rate change events in a flow of messages over one or more time scales and at a rather low computational cost. The detected events can serve as an input for post-processing steps intended to detect or confirm the occurrence of specific situations within the network element and/or network. Such post processing may involve a number of mathematical methods, e.g. linear regression, polynomial curve fitting and the like.

Elements such as the control units or modules could be e.g. hardware means like e.g. an ASIC, or a combination of hardware and software means, e.g. an ASIC and an FPGA, or at least one microprocessor and at least one memory with software modules located therein.

A network management system can be a hardware device, for example a personal computer, a workstation, an Internet appliance, or other general purpose or specific purpose communications device. A software program running on this system performs network management functions to control the network elements.

The invention is not limited to the described embodiments. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps.

In the claims, any reference signs placed between parentheses shall not be construed as limiting the scope of the claims.

Table 1: Pseudo-code for the monitoring method illustrated in figures 3 to 5

---

**Algorithm 1: Basic functions for algorithms**

Data: $T$, $\sigma$, $\rho$, $\overline{P}$, $\underline{P}$.
ConstainstUpdate($\rho$, $\overline{P}$, $\underline{P}$,$P$)
$\quad$ if $y < (\rho(x - \overline{c}) + \overline{y})$ then $\overline{P} = P$;
$\quad$ else if $y > (\rho(x - \underline{c}) + \underline{y})$ then $\underline{P} = P$;
IsLowerConstrained($T$, $\rho$, $P$,$\underline{P}$)
$\quad$ if $\rho(x - \underline{c} - T) + \underline{y} \leq y$ then True else False

IsUpperConstrained($\sigma$, $\rho$, $P$,$\overline{P}$)
$\quad$ if $y \leq \rho(x - \overline{c}) + \sigma + \overline{y}$ then True else False

---

**Algorithm 2: Anomalies Detection**

Data: $T$, $\sigma$, $\rho$, $\overline{P}$, $\underline{P}$,$inputFlow$.
Result: $outputFile$ that contains rates computed,
$\qquad\qquad outputFlow$ that contains breaking constraints
$\qquad\qquad$ points
Update$\rho$($T$, $\sigma$, $\rho$, $\overline{P}$, $\underline{P}$, $P$)
$\quad$ if $not\ IsLowerConstrained(T, \rho, \underline{P}, P)$ then
$\qquad\quad \rho = (y - \overline{y})/(x - \overline{c})$;
$\qquad\quad \underline{P} = \overline{P} = P$ ;
$\qquad\quad outpuFlow \leftarrow (outputFlow :: P)$
$\qquad\quad$ if $not\ IsLowerConstrained(T, \rho, \underline{P}, P)$ then
$\qquad\qquad\quad \rho = (y - y_n)/(x - x_n)$;

$\quad$ else if $not\ IsUpperConstrained(\sigma, \rho, \overline{P}, P)$ then
$\qquad\quad \rho = (y - \underline{y})/(x - \underline{c})$;
$\qquad\quad \underline{P} = P_u = P$;
$\qquad\quad outpuFlow \leftarrow (outputFlow :: P)$
$\qquad\quad$ if $not\ IsUpperConstrained((\sigma, \rho, \overline{P}, P)$ then
$\qquad\qquad\quad \rho = (y - y_n)/(x - x_n)$;

$\quad$ begin
$\qquad\quad P_n = (0; 0)$;
$\qquad\quad n = 1$;
$\qquad\quad P = (receiveDate(intputFlow), 1)$; //message received

$\qquad\quad$ while $true$ do
$\qquad\qquad\quad$ Update$\rho$($T$, $\sigma$, $\rho$, $\overline{P}$, $\underline{P}$, $P$);
$\qquad\qquad\quad$ ConstainstUpdate($\rho$, $\overline{P}$, $\underline{P}$, $P$)
$\qquad\qquad\quad P_n = P; n = n + 1; P =$
$\qquad\qquad\quad (receiveDate(intputFlow), n)$;
$\quad$ end

---

## Claims

1. A method for monitoring a communication device (2, 20), comprising:

$\quad$ detecting a flow of messages (3, 4, 24) at an interface (23) of the communication device,
$\quad$ recording a sequence of message events over time, wherein a message event record comprises a date of a detected message of the flow,

computing a modelized rate (p) of the messages over time as a function of the sequence of message events, **characterized in that**

the modelized rate (p) represents a rate at which the messages of the flow are expected to be sent or received, detecting a sequence of rate change events over time, and generating a corresponding sequence of rate change event records, wherein a rate change event record comprises an updated value of the modelized rate of the messages,

wherein said steps of computing a modelized rate of the messages over time and detecting a sequence of rate change events over time comprises repeatedly performing the steps of:

predicting a time-window (U, L) for the date of a subsequent message event (P) of the sequence of message events as a function of past message events of the sequence of message events and a current modelized rate (p) of the messages,

if the date of the subsequent message event of the sequence of message events is out of the predicted time-window, detecting a rate change event and updating the modelized rate as a function of the date of the subsequent message event,

wherein the updating of the modelized rate comprises:

computing an actual rate of the messages as a function of the date of the subsequent message event and the date of an earlier message event of the sequence of message events, and

taking the actual rate as the new current modelized rate.

2. A method in accordance with claim 1, wherein the repeated steps further comprise:

if the detected date of the subsequent message is within the predicted time-window (U, L), updating the time-window as a function of detected date of the subsequent message event so as to narrow down the time-window.

3. A method in accordance with claim 2, wherein the updating of the time-window comprises:

computing an actual rate of the messages as a function of the detected date of the subsequent message event of the sequence, and

advancing a latest boundary (L) of the time-window if the actual rate is above the current modelized rate and delaying an earliest boundary (U) of the time window if the actual rate is below the current modelized rate.

4. A method in accordance with any one of claims 1 to 3, wherein at least one of an earliest boundary and a latest boundary of the time-window is computed as a function of the rank (y) of the subsequent message event in the sequence of message events divided by the current modelized rate (p).

5. A method in accordance with any one of claims 1 to 4, wherein an earliest boundary (U) of the time-window is computed as a function of a positive parameter ($\sigma$) representing a maximum number of messages of the flow that may arrive simultaneously at the communication device in a normal state of the communication device.

6. A method in accordance with any one of claims 1 to 5, wherein a latest boundary (L) of the time-window is computed as a function of a positive parameter (T) representing a maximum period of time during which no message of the flow may be detected at the communication device in a normal state of the communication device.

7. A method in accordance with any one of claims 1 to 6, wherein said steps of computing a modelized rate of the messages over time and detecting a sequence of rate change events over time constitute a monitoring operation at a first level (51), the method further comprising:

filtering the sequence of message events as a function of the rate change events detected during the first-level monitoring operation (51), and

performing again said steps of computing a current modelized rate of the messages over time and detecting a sequence of rate change events over time by taking the filtered sequence of message events (61) as an input instead of the sequence of message events.

8. A method in accordance with claim 7, wherein the step of filtering the sequence of message events retains only message events that caused detection of a rate change event.

9. A method in accordance with claim 8, further comprising one or more further monitoring operations at consecutive levels (53), each further monitoring operation comprising:

filtering the sequence of message events taken as an input for the monitoring operation at the previous level (52) so as to retain only message events that caused a rate change event to be detected during the monitoring operation at the previous level,
performing again the steps of computing a current modelized rate of the messages over time and detecting a sequence of rate change events over time by taking the filtered sequence of message events (62) as an input.

10. A method in accordance with claim 9, comprising monitoring operations at five consecutive levels or less.

11. A method in accordance with any one of claims 1 to 10, further comprising detecting an abnormal state of the communication device as a function of the sequence of rate change events.

12. A method in accordance with any one of claims 7 to 10, further comprising detecting an abnormal state of the communication device as a function the rate change events detected during the monitoring operation at one or more levels.

13. A method in accordance with any one of claims 7 to 10, further comprising detecting an abnormal state of the communication device as a function of the sequence of rate change events detected during the monitoring operation at a highest level.

14. A method in accordance with any one of claims 1 to 13, wherein the flow of messages is made up of protocol messages recurrently exchanged between network elements of a communications network as a result of automated processes controlled by protocol engines of the network elements.

15. A method in accordance with claim 14, wherein the protocol engines controls a predefined protocol which is one of a routing protocol to refresh adjacencies between nodes or update network topology, a signaling protocol to refresh or update connections, and a network management protocol to collect reports from management agents.

16. A method in accordance with any one of claims 1 to 13, wherein the flow of messages is made up of messages recurrently exchanged between network elements of a communications network as a result of automated processes controlled by operating systems of the network elements.

17. A computer program comprising executable code that causes a computer to perform all the steps of a method in accordance with any one of claims 1 to 16 when executed.

**Patentansprüche**

1. Verfahren zur Überwachung einer Kommunikationsvorrichtung (2, 20) umfassend:

Erfassen eines Flusses von Nachrichten (3, 4, 24) an einer Schnittstelle (23) der Kommunikationsvorrichtung,
Aufzeichnen einer Sequenz von Nachrichtenereignissen im Zeitablauf, wobei eine Nachrichtenereignisaufzeichnung einen Zeitpunkt einer in dem Fluss erfassten Nachricht umfasst,
Errechnen einer modellierten Rate (p) der Nachrichten im Zeitablauf als Funktion der Sequenz von Nachrichtenereignissen, **dadurch gekennzeichnet, dass**
die modellierte Rate (p) eine Rate repräsentiert, bei der die Nachrichten des Flusses voraussichtlich gesendet oder empfangen werden,
Erfassen einer Sequenz von Ratenänderungsereignissen im Zeitablauf und Erstellen einer korrespondierenden Sequenz von Ratenänderungsereignisaufzeichnungen, wobei eine Ratenänderungsereignisaufzeichnung einen aktualisierten Wert der modellierten Rate von Nachrichten umfasst, wobei die Schritte des Errechnens einer modellierten Rate der Nachrichten im Zeitablauf und des Erfassens einer Sequenz von Ratenänderungsereignissen im Zeitablauf eine wiederholte Ausführung der Schritte umfasst:

Vorhersagen eines Zeitfensters (U, L) für den Zeitpunkt eines folgenden Nachrichtenereignisses (P) der Sequenz von Nachrichtenereignissen als Funktion von vergangenen Nachrichtenereignissen der Sequenz von Nachrichtenereignissen und einer aktuell modellierten Rate (p) der Nachrichten, falls der Zeitpunkt des folgenden Nachrichtenereignisses der Sequenz von Nachrichtenereignissen außerhalb des vorhergesagten Zeitfensters liegt, Erfassen eines Ratenänderungsereignisses und Aktualisieren der modellierten Rate als Funktion des Zeitpunkts des folgenden Nachrichtenereignisses, wobei das Aktualisieren der modellierten Rate umfasst:

Errechnen einer gegenwärtigen Rate der Nachrichten als Funktion des Zeitpunkts des folgenden Nachrichtenereignisses und des Zeitpunkts eines früheren Nachrichtenereignisses der Sequenz von Nachrichtenereignissen, und
Übernehmen der gegenwärtigen Rate als neue aktuell modellierte Rate.

2. Verfahren gemäß Anspruch 1, wobei die wiederholten Schritte weiterhin umfassen:

Aktualisieren des Zeitfensters als Funktion des erfassten Zeitpunkts des folgenden Nachrichtenereignisses, um das Zeitfenster derart einzugrenzen, falls der erfasste Zeitpunkt der folgenden Nachricht innerhalb des vorhergesagten Zeitfensters (U, L) liegt.

3. Verfahren gemäß Anspruch 2, wobei das Aktualisieren des Zeitfensters umfasst:

Errechnen einer gegenwärtigen Rate der Nachrichten als Funktion des erfassten Zeitpunkts des folgenden Nachrichtereignisses der Sequenz und
Vorrücken einer spätesten Grenze (L) des Zeitfensters, falls die gegenwärtige Rate oberhalb der aktuell modellierten Rate liegt, und Hinausschieben der frühesten Grenze (U) des Zeitfensters, falls die gegenwärtige Rate unterhalb der aktuell modellierten Rate liegt.

4. Verfahren gemäß einem oder mehreren der vorhergehenden Ansprüche 1 bis 3, wobei zumindest eine früheste Grenze oder eine späteste Grenze des Zeitfensters als Funktion des Ranges (y) des folgenden Nachrichtereignisses in der Sequenz von Nachrichtenereignissen geteilt durch die aktuell modellierte Rate (p) errechnet wird.

5. Verfahren gemäß einem oder mehreren der vorhergehenden Ansprüche 1 bis 4, wobei eine früheste Grenze (U) des Zeitfensters als Funktion eines positiven, eine maximale Anzahl von Nachrichten des Flusses, welche in einem normalen Zustand der Kommunikationsvorrichtung gleichzeitig an der Kommunikationsvorrichtung ankommen können, repräsentierenden Parameters ($\sigma$) errechnet wird.

6. Verfahren gemäß einem oder mehreren der vorhergehenden Ansprüche 1 bis 5, wobei eine späteste Grenze (L) des Zeitfensters als Funktion eines positiven, eine maximale Zeitspanne, während der keine Nachricht des Flusses in einem normalen Zustand der Kommunikationsvorrichtung an der Kommunikationsvorrichtung erfasst werden kann, repräsentierenden Parameters (T) errechnet wird.

7. Verfahren gemäß einem oder mehreren der vorhergehenden Ansprüche 1 bis 6, wobei die Schritte des Errechnens einer modellierten Rate der Nachrichten im Zeitablauf und des Erfassens einer Sequenz von Ratenänderungsereignissen im Zeitablauf einen Überwachungsvorgang auf einer ersten Ebene (51) darstellen, wobei das Verfahren weiterhin umfasst:

Filtern der Sequenz von Nachrichtenereignissen als Funktion der während der ersten Stufe (51) des Überwachungsvorgangs erfassten Ratenänderungsereignisse und
Durchführen der Schritte des Errechnens einer aktuell modellierten Rate der Nachrichten im Zeitablauf und des Erfassens einer Sequenz von Ratenänderungsereignissen im Zeitablauf, wobei anstelle der Sequenz von Nachrichtenereignissen die gefilterte Sequenz von Nachrichtenereignissen (61) als Input genommen wird.

8. Verfahren gemäß Anspruch 7, wobei der Schritt des Filterns der Sequenz von Nachrichtenereignissen nur die Nachrichtenereignisse zurückbehält, die die Erfassung eines Ratenänderungsereignisses ausgelöst haben.

9. Verfahren gemäß Anspruch 8, weiterhin umfassend einen oder mehrere weitere Überwachungsvorgänge auf aufeinanderfolgenden Stufen (53), wobei jeder weitere Überwachungsvorgang umfasst:

Filtern der Sequenz von Nachrichtenereignissen, die als Input für den Überwachungsvorgang auf der vorausgegangenen Stufe (52) genommen wurde, um derart nur die Nachrichtenereignisse zurückzubehalten, die während des Überwachungsvorgangs auf der vorausgegangenen Stufe eine Erfassung eines Ratenänderungsereignisses auslösten,

wiederholtes Ausführen der Schritte des Errechnens einer aktuell modellierten Rate der Nachrichten im Zeitablauf und des Erfassens einer Sequenz von Ratenänderungsereignissen im Zeitablauf, wobei die gefilterte Sequenz von Nachrichtenereignissen (62) als ein Input genommen wird.

10. Verfahren gemäß Anspruch 9, umfassend Überwachungsvorgänge auf fünf oder weniger aufeinanderfolgenden Stufen.

11. Verfahren gemäß einem oder mehreren der vorhergehenden Ansprüche 1 bis 10, weiterhin umfassend:

Erfassen eines abnormalen Zustandes der Kommunikationsvorrichtung als Funktion der Sequenz von Ratenänderungsereignissen.

12. Verfahren gemäß einem oder mehreren der vorhergehenden Ansprüche 7 bis 10, weiterhin umfassend:

Erfassen eines abnormalen Zustandes der Kommunikationsvorrichtung als Funktion der Ratenänderungsereignisse, die während des Überwachungsvorgangs auf einer oder mehreren Stufen erfasst wurden.

13. Verfahren gemäß einem oder mehreren der vorhergehenden Ansprüche 7 bis 10 weiterhin umfassend:

Erfassen eines abnormalen Zustands der Kommunikationsvorrichtung als Funktion der während des Überwachungsvorgangs auf höchster Stufe erfassten Sequenz von Ratenänderungsereignissen.

14. Verfahren gemäß einem oder mehreren der vorhergehenden Ansprüche 1 bis 13, wobei der Fluss von Nachrichten aus zwischen Netzwerkelementen eines Kommunikationsnetzwerks als Folge automatisierter, durch Protokollmaschinen der Netzwerkelemente kontrollierter Prozesse wiederholt ausgetauschter Protokollnachrichten besteht.

15. Verfahren gemäß Anspruch 14, wobei die Protokollmaschinen ein vordefiniertes Protokoll kontrollieren, das entweder ein Routingprotokoll zum Auffrischen von Nachbarschaften zwischen Knoten oder zum Updaten von Netzwerktopologie, ein Signalprotokoll zum Auffrischen oder Aktualisieren von Verbindungen oder ein Netzwerkmanagementprotokoll zum Sammeln von Berichten von Managementagenten ist.

16. Verfahren gemäß einem oder mehreren der vorhergehenden Ansprüche 1 bis 13, wobei der Fluss von Nachrichten aus zwischen Netzwerkelementen eines Kommunikationsnetzwerks als Folge automatisierter, durch Betriebssysteme der Netzwerkelemente kontrollierter Prozesse wiederholt ausgetauschter Nachrichten besteht.

17. Computerprogramm umfassend einen ausführbaren Code, der einen Computer bei Ausführung veranlasst, sämtliche Schritte eines Verfahrens gemäß einem oder mehreren der vorhergehenden Ansprüche 1 bis 16 durchzuführen.

**Revendications**

1. Procédé pour surveiller un dispositif de communication (2,20) comportant :

détecter un flux de messages (3,4, 24) au niveau d'une interface du dispositif de communication,
enregistrer une séquence d'événements de message au cours du temps, un enregistrement d'événement de message comportant une date d'un message du flux détecté,
calculer un taux modélisé (p) des messages au cours du temps en fonction de la séquence d'événements de message, **caractérisé en ce que** :

le taux modélisé (p) représente un taux auquel les messages du flux sont censés être envoyés ou reçus,
détecter une séquence d'événements de changement de taux au cours du temps, et engendrer une séquence correspondante d'enregistrements d'événement de changement de taux, un enregistrement d'événement de changement de taux comportant une valeur actualisé du taux modélisé (p) des messages,

dans lequel lesdites étapes de calculer un taux modélisé (p) des messages au cours du temps et détecter une séquence d'événements de changement de taux au cours du temps comportent l'exécution répétée des étapes suivantes :

prédire une fenêtre temporelle (U, L) pour la date d'un événement de message ultérieur (P) de la séquence d'événements de message en fonction d'événements de message passés de la séquence d'événements de message et d'un taux modélisé courant (p) des messages,
si la date de l'événement de message ultérieur (P) de la séquence d'événements de message est en dehors de la fenêtre temporelle prédite, détecter un événement de changement de taux et actualiser le taux modélisé en fonction de la date de l'événement de message ultérieur (P),

dans lequel l'actualisation du taux modélisé comporte :

calculer un taux réel des messages en fonction de la date de l'événement de message ultérieur (P) et la date d'un événement de message antérieur de la séquence d'événements de message, et
prendre le taux réel comme nouveau taux modélisé actuel.

2. Procédé selon la revendication 1, dans lequel les étapes répétées comportent en outre :

si la date détectée du message ultérieur est dans la fenêtre temporelle prédite (U, L), actualiser la fenêtre temporelle en fonction de la date de l'événement de message ultérieur pour resserrer la fenêtre temporelle.

3. Procédé selon la revendication 2, dans lequel actualiser la fenêtre temporelle comporte :

calculer un taux réel des messages en fonction de la date de l'événement de message ultérieur de la séquence, et avancer une borne de fin (L) de la fenêtre temporelle si le taux réel est supérieur au taux modélisé actuel et retarder une borne de début (U) de la fenêtre temporelle si le taux réel est inférieur au taux modélisé actuel.

4. Procédé selon l'une quelconque des revendications 1 à 3, dans lequel au moins l'une parmi une borne de début et une borne de fin de la fenêtre temporelle est calculée en fonction du rang (y) de l'événement de message postérieur dans la séquence d'événements de message divisé par le taux modélisé actuel (p).

5. Procédé selon l'une quelconque des revendications 1 à 4, dans lequel une borne de début (U) de la fenêtre temporelle est calculée en fonction d'un paramètre positif ($\sigma$) représentant un nombre maximal de messages du flux pouvant arriver simultanément au dispositif de communication dans un état normal du dispositif de communication.

6. Procédé selon l'une quelconque des revendications 1 à 5, dans lequel une borne de fin (L) de la fenêtre temporelle est calculée en fonction d'un paramètre positif (T) représentant une période temps maximale pendant laquelle aucun message du flux ne peut être détecté au niveau du dispositif de communication dans un état normal du dispositif de communication.

7. Procédé selon l'une quelconque des revendications 1 à 6, dans lequel lesdites étapes de calculer un taux modélisé (p) des messages au cours du temps et détecter une séquence d'événements de changement de taux au cours du temps constituent une opération de surveillance à un premier niveau (51), le procédé comportant en outre :

filtrer la séquence d'événements de message en fonction des événements de changement de taux détectés au cours de l'opération de surveillance au premier niveau (51), et
effectuer à nouveau les étapes de calculer un taux modélisé actuel des messages au cours du temps et détecter une séquence d'événements de changement de taux au cours du temps en prenant la séquence filtrée d'événements de message (61) comme entrée à la place de la séquence d'événements de message.

8. Procédé selon la revendication 7, dans lequel l'étape de filtrer la séquence d'événements de message ne retient que les événements de message qui ont causé la détection d'un événement de changement de taux.

9. Procédé selon la revendication 8, comportant en outre une ou plusieurs opérations de surveillance supplémentaires à des niveaux consécutifs (53), chaque opération de surveillance supplémentaire comportant :

filtrer la séquence d'événements de message prise comme entrée pour l'opération de surveillance au niveau précédent (52) de manière à ne retenir que les événements de message qui ont causé la détection d'un événement de changement de taux pendant l'opération de surveillance au niveau précédent,
effectuer à nouveau les étapes de calculer un taux modélisé actuel des messages au cours du temps et détecter une séquence d'événements de changement de taux au cours du temps en prenant la séquence filtrée d'événements de message (62) comme entrée.

10. Procédé selon la revendication 9, comportant des opérations de surveillance à cinq niveaux consécutifs ou moins.

11. Procédé selon l'une quelconque des revendications 1 à 10, comportant en outre détecter un état anormal du dispositif de communication en fonction de la séquence d'événements de changement de taux.

12. Procédé selon l'une quelconque des revendications 7 à 10, comportant en outre détecter un état anormal du dispositif de communication en fonction des événements de changement de taux détectés pendant l'opération de surveillance à un ou plusieurs niveaux.

13. Procédé selon l'une quelconque des revendications 7 à 10, comportant en outre détecter un état anormal du dispositif de communication en fonction de la séquence d'événements de changement de taux détectée pendant l'opération de surveillance au niveau le plus élevé.

14. Procédé selon l'une quelconque des revendications 1 à 13, dans lequel le flux de messages est constitué de messages de protocole échangés de manière récurrente entre des éléments de réseau d'un réseau de communication en conséquence de procédés automatisés commandés par des moteurs protocolaires des éléments de réseau.

15. Procédé selon la revendication 14, dans lequel les moteurs protocolaires commandent un protocole prédéfini parmi un protocole de routage pour rafraîchir des adjacences entre noeuds ou mettre à jour une topologie du réseau, un protocole de signalisation pour rafraîchir ou mettre à jour des connexions, et un protocole de gestion de réseau pour collecter des rapports depuis des agents de gestion.

16. Procédé selon l'une quelconque des revendications 1 à 13, dans lequel le flux de messages est constitué de messages échangés de manière récurrente entre des éléments de réseau d'un réseau de communication en conséquence de procédés automatisés commandés par des systèmes d'exploitation des éléments de réseau.

17. Programme d'ordinateur comportant des instructions exécutables entraînant la réalisation par un ordinateur de toutes les étapes d'une méthode selon l'une quelconque des revendications 1 à 16 lorsqu'il est exécuté.

FIG.1

FIG.2

FIG.3

FIG.4

16

FIG.5

FIG.6

FIG.7

FIG. 8

FIG. 9

FIG. 10

F. IG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110078302 A
- EP 1244248 A